# EUROPÄISCHE PATENTSCHRIFT

(11) **EP 0 530 386 B1**
(45) Veröffentlichungstag und Bekanntmachung des Hinweises auf die Patenterteilung: **30.08.1995**
(21) Anmeldenummer: 91114041.6
(22) Anmeldetag: 22.08.1991
(51) Int. Cl.: G03B 23/04

(54) **Diamagazin**
Slide magazine
Magasin de diapositives

(43) Veröffentlichungstag der Anmeldung: 10.03.1993
(73) Patentinhaber: REFLECTA GMBH FOTO FILM PROJEKTION, D-91126 Schwabach (DE)
(72) Erfinder: Kronbauer, Hermann, W-8011 Aschheim (DE); Rehm, Christian, W-8000 München (DE)
(74) Vertreter: LOUIS, PÖHLAU, LOHRENTZ & SEGETH

(56) Entgegenhaltungen:
- EP-A- 0 019 698
- DE-A- 2 025 653
- FR-A- 1 519 086
- GB-A- 2 094 498

## Beschreibung

Die Erfindung betrifft ein Diamagazin für Diarähmchen, die entlang ihres Umfangsrandes auf ihren beiden Seiten mit einer umlaufenden Rille und die an jeder Randkante des Umfangsrandes mit einer Einkerbung ausgebildet sind, wobei das Diamagazin an einer Basis voneinander beabstandete Querrippen aufweist, durch welche Abteile zur Aufnahme je eines Diarähmchens gebildet sind, wobei von jeder Querrippe seitlich mindestens ein in eine Rille des entsprechendes Diarähmchens eingreifender Ansatz wegsteht und die Basis mit voneinander beabstandeten federnden Fingern versehen ist, von welchen jeweils einer einem Abteil zugeordnet ist und von welchen jeder mit einer nach oben stehenden Rastnase zum Einrasten in die Kerbe des entsprechenden Diarähmchens ausgebildet ist, und wobei zur verkippsicheren Halterung der Diarähmchen mit den Querrrippen fluchtende Halterippen von der Basis nach oben stehen.

Dieses z.B. aus dem Dokument EP-A-0 019 698 bekannte, für sogenannte CS-Diarähmchen geeignete Diamagazin ist mit Halterippen ausgebildet, die von einer seitlichen Längswand des Diamagazins in das Innere des Diamagazins hineinstehen. Durch diese längs des Diamagazins verlaufende Seitenwand ist es bei diesem bekannten Diamagazin nur möglich, die im Diamagazin verschüttsicher gehaltenen Diarähmchen einseitig zu entnehmen. Die Verschüttsicherung der Diarähmchen wird hierbei durch die Rastnasen der federnden Finger und durch die von den Querrippen in Längsrichtung des Diamagazins wegstehenden seitlichen Ansätze bewirkt, die in die entsprechenden Rillen des Diarähmchens hineinstehen. Durch die Rastnasen der federnden Finger und die Kerben an der entsprechenden Randkante des Umfangsrandes des Diarähmchens ergibt sich bekanntermaßen eine Sicherung gegen ungewollte seitliche Verschiebung eines Diarähmchens aus dem Diamagazin heraus.

Der Erfindung liegt die Aufgabe zugrunde, ein Diamagazin der eingangs genannten Art zu schaffen, das nicht nur einseitig mit Diarähmchen bestückbar, bzw. aus welchem Diarähmchen nicht nur einseitig entnehmbar sind, sondern das auch eine beidseitige Bestückung sowie eine beidseitige Entnahme von sogenannten CS-Diarähmchen zuläßt.

Diese Aufgabe wird erfindungsgemäß durch die Merkmale des Anspruchs 1 gelöst, insbesondere dadurch, daß das Diamagazin in seiner Querrichtung mit voneinander getrennten Querrippen ausgebildet ist, zwischen welchen die entsprechenden Rastnasen der Abteile vorgesehen sind, wobei die in Längsrichtung des Diamagazins miteinander fluchtenden Rastnasen eine Symmetrieachse bilden, entlang der die Querrippen in Querrichtung des Diamagazins voneinander beabstandet angeordnet sind, und jede der sich in Querrichtung gegenüber liegenden Querrippen eine nach oben stehende Halterippe aufweist. Bei der erfindungsgemäßen Ausbildung des Diamagazins stehen die Halterippen also nicht von einer in Längsrichtung des Diamagazins verlaufenden Seitenwand weg, sondern von den beiden sich jeweils in Bezug auf die in Längsrichtung verlaufende Symmetrieachse gegenüber liegenden Querrippen. Auf eine Seitenwand wird also verzichtet, so daß sogenannte CS-Diarähmchen mit umlaufenden Rillen und mittigen Kerben von beiden Seiten aus dem Diamagazin entnehmbar sind. Entsprechendes gilt für die Anordnung derartiger Diarähmchen im Diamagazin, auch diese ist von beiden Seiten des Diamagazins möglich. Ein derartiges Diamagazin ist für einen Diaprojektor vorgesehen, der in der europäischen Patentanmeldung 91114040, nunmehr veröffentlicht als EP-A-0 530 385 beschrieben und der als Überblend-Projektor ausgebildet ist. Selbstverständlich kann das erfindungsgemäße Diamagazin auch bei herkömmlichen Diaprojektoren zum Einsatz gelangen, welche nur für eine einseitige Entnahme von Diarähmchen aus dem Diamagazin geeignet sind.

Um die einzelnen Diarähmchen einfach, zeitsparend und unproblematisch im Diamagazin anordnen und festhalten zu können, ist es zweckmäßig, wenn die/jede Halterippe und die zugehörige Querrippe eine gemeinsame Außenkante bilden. Demselben Zweck ist es dienlich, wenn jede Außenkante schneidenförmig ausgebildet ist. Dadurch ergibt sich für ein Diarähmchen eine gewiße Führungs- und Zentrierungswirkung für das einzelne Diarähmchen.

Eine Materialersparnis ergibt sich, wenn beim erfindungsgemäßen Diamagazin jede Halterippe in Querrichtung des Diamagazins eine Breitenabmeßung aufweist, die kleiner ist als die Länge der entsprechenden Querrippe, an welcher sie einseitig angeformt sein kann. Andererseits wird hierdurch jedoch in vorteilhafter Weise die Halterung der einzelnen im Diamagazin angeordneten Diarähmchen nicht beeinträchtigt, weil die einander seitlich gegenüber liegenden, zusammengehörenden Halterippen voneinander einen Abstand aufweisen, der an die Länge der Randkante des quadratischen Diarähmchens angepaßt ist, bzw. dieser entspricht.

Eine sichere und zuverlässige Führung des in einem Abteil des Diamagazins befindlichen Diarähmchens und eine sichere und zuverlässige Halterung desselben im entsprechenden Anteil des Diamagazins ergibt sich, wenn von jeder Querrippe auf jeder Seite zwei voneinander beabstandete Ansätze wegstehen, von welchen einer im Bereich der zugehörigen Halterippe und der zweite im Bereich des halterippenfreien Abschnittes der entsprechenden Querrippe angeformt ist.

Eine verkantungsfreie präzise Führung eines in das Diamagazin einzusteckenden CS-Diarähmchens wird erzielt, wenn beim erfindungsgemäßen Diamagazin jeder im Bereich der zugehörigen Halterippe vorgesehene Ansatz an seinem der Außenkante von Querrippe und Halterippe zugewandten Endabschnitt mit einer Abschrägung ausgebildet ist. Hierbei ist es vorteilhaft, wenn jeder mit einer in das Abteil hinein konvergierenden Anschrägung ausgebildete Ansatz gegen die entsprechende Außenkante von Quer- und Halterippe in das Innere des Diamagazins hineinversetzt ist. Durch eine solche Ausbildung ergibt sich beim Einsetzen bzw. Einschieben eines CS-Diarähmchens in ein entsprechendes Anteil des Diamagazins zuerst eine Führung durch die vorzugsweise schneidenförmig ausgebildete Außenkante von Quer- und Halterippe und daran anschließend eine exakte Führung durch die Abschrägungen der genannten Ansätze, die in eine entsprechende Rille des CS-Diarähmchens hineinstehen. Während des Einschiebens eines solchen Diarähmchens in eines der Abteile des Diamagazins wird der zu diesem Anteil zugehörige federnde Finger mit seiner nach oben stehenden Rastnase so lange federnd nach unten gedrückt, bis die vom federnden Finger wegstehende Rastnase in die mittige Kerbe der entsprechenden Randkante des Umfangsrandes des Diarähmchens einrastet. Es ergibt sich also ein Diamagazin, das beidseitig bestückbar bzw. aus dem Diarähmchen beidseitig entnehmbar sind, wobei außerdem eine verschüttsichere Anordnung von CS-Diarähmchen im Diamagazin gewährleistet wird.

Weitere Einzelheiten, Merkmale und Vorteile ergeben sich aus der nachfolgenden Beschreibung eines in der Zeichnung abschnittweise dargestellten Ausführungsbeispieles des erfindungsgemäßen Diamagazins. Es zeigt:
- Fig.1: eine räumliche Darstellung eines Endabschnittes des Diamagazins in Blickrichtung von schräg oben auf das Diamagazin,
- Fig.2: eine räumliche Darstellung des in Fig. 1 gezeichneten Endabschnittes des Diamagazins in Blickrichtung von schräg unten,
- Fig.3: einen Schnitt durch das Diamagazin entlang der Schnittlinie III - III in Figur 1, wobei ein im Diamagazin angeordnetes verschüttsicher gehaltenes CS-Rähmchen durch dünne strichpunktierte Linien abschnittweise angedeutet ist,
- Fig.4: einen Abschnitt des Diamagazins in Blickrichtung von oben, und
- Fig.5: den Abschnitt des Diamagazins gemäß Fig. 4 in Blickrichtung des Pfeiles V von der Seite.

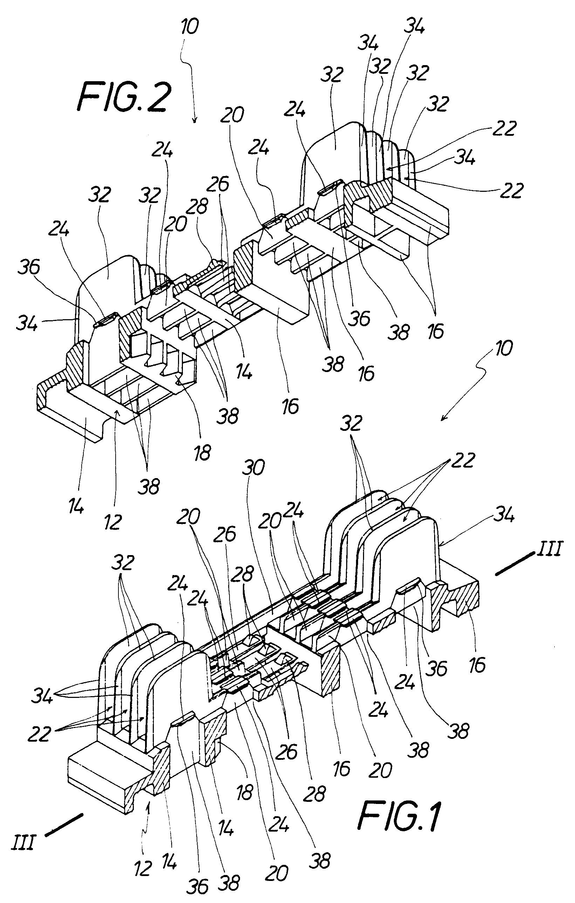

Figur 1 zeigt in einer räumlichen Darstellung einen Endabschnitt des Diamagazins, das für sogenannte CS-Diarähmchen vorgesehen ist, und aus welchem diese Diarähmchen sowohl einseitig als auch beidseitig entnehmbar sind. Das Diamagazin 10 weist eine Basis 12 auf, die insbesondere aus Figur 2 deutlich ersichtlich ist. Die Längselemente 14 und 16 bilden miteinander eine Einheit und sind zur Basis 12 verbunden. Aus Figur 2 ist beispielsweise die Ausbildung des Längselementes 14 mit einer Zahnstange 18 zu erkennen, in welche ein Zahnrad eines Diaprojektors eingreift, um das Diamagazin in an sich bekannter Weise in seiner Längsrichtung schrittweise vorwärts oder zurück zu bewegen.

Die Basis 12 weist voneinander beabstandete Querrippen 20 auf, durch welche Anteile 22 zur Aufnahme je eines Diarähmchens gebildet sind. Von jeder Querrippe 20 stehen seitlich Ansätze 24 weg, die in am CS-Diarähmchen ausgebildete, entlang des Umfangsrandes des Diarähmchens umlaufende Rillen eingreift, um das entsprechende Diarähmchen in einem der Anteile 22 des Diamagazins 10 verschüttsicher festzuhalten.

Die Basis 12 ist ferner mit voneinander beabstandeten federnden Fingern 26 ausgebildet, wobei jedem Abteil 22 ein Finger 26 zugeordnet ist. Jeder Finger 26 ist mit einer nach oben stehenden Rastnase 28 ausgebildet, wobei die Rastnasen 28 der federnden Finger 26 in Längsrichtung des Diamagazins 10 hintereinander angeordnet sind und miteinander fluchten, wobei die Rastnasen 28 die Symmetrieachse des Diamagazins 10 in Längsrichtung bilden.

Mit der Bezugsziffer 30 ist in Figur 1 eine Anschlußwand des Diamagazins 10 bezeichnet.

Die Rastnasen 28 dienen zum Einrasten in eine in der Mitte jeder Randkante eines jeden CS-Diarähmchens ausgebildete Kerbe und folglich zur Sicherung des in einem entsprechenden Anteil 22 des Diamagazins angeordneten CS-Diarähmchens gegen ungewollte seitliche Verschiebungen. Die federnden Finger 26 weisen jedoch eine derartige Elastizität auf, daß es nach Aufbringung einer definierten seitlichen Verschiebekraft auf das entsprechende Diarähmchen möglich ist, dieses auf der einen oder anderen Seite aus dem Diamagazin 10 heraus zu verschieben.

Um ein ungewolltes Verkippen der im Diamagazin 10 angeordneten und gehaltenen CS-Diarähmchen um die Ansätze 24, d.h. in Längsrichtung des Diamagazins 10 zu verhindern, stehen von den Querrippen 20 Halterippen 32 nach oben weg, durch welche die einzelnen Anteile 22 des Diamagazins 10 definiert begrenzt werden. Jede Halterippe 32 weist - wie aus den Figuren deutlich ersichtlich ist - eine Breitenabmessung auf, die kleiner ist als die Länge der entsprechenden Querrippe, wobei die Halterippe 32 und die mit ihr fluchtende, zugehörige Querrippe 20 jeweils eine gemeinsame Außenkante 34 bilden. Die Außenkanten 34 sind schneidenförmig ausgebildet.

Aus den Figuren ist auch ersichtlich, daß von jeder Querrippe 20 auf jeder Seite zwei voneinander beabstandete Ansätze 24 wegstehen, von welchen der eine Ansatz 24 im Bereich der zugehörigen Halterippe 32 und der zweite Ansatz 24 im Bereich des halterippenfreien Abschnittes der entsprechenden Querrippe angeformt ist. Jeder im Bereich der zugehörigen Halterippe 32 vorgesehene Ansatz 24 ist an seinem der Außenkante 34 von Quer- und Halterippe 20, 32 zugewandten Endabschnitt mit einer Abschrägung 36 ausgebildet, die in das entsprechende Anteil 22 hinein divergiert. Aus den Figuren ist auch deutlich ersichtlich, daß jeder im Bereich der zugehörigen Halterippe vorgesehene, mit einer Anschrägung 36 ausgebildete Ansatz 24 gegen die entsprechende Außenkante 34 von Quer- und Halterippe 20, 32 in das Innere des Diamagazins 10 versetzt ist. Um die in Längsrichtung des Diamagazins 10 von den Querrippen 20 seitlich wegstehenden Ansätze 24 problemlos formen zu können, ist die Basis 12 des Diamagazins 10 mit entsprechenden Formschieber - Aussparungen 38 ausgebildet.

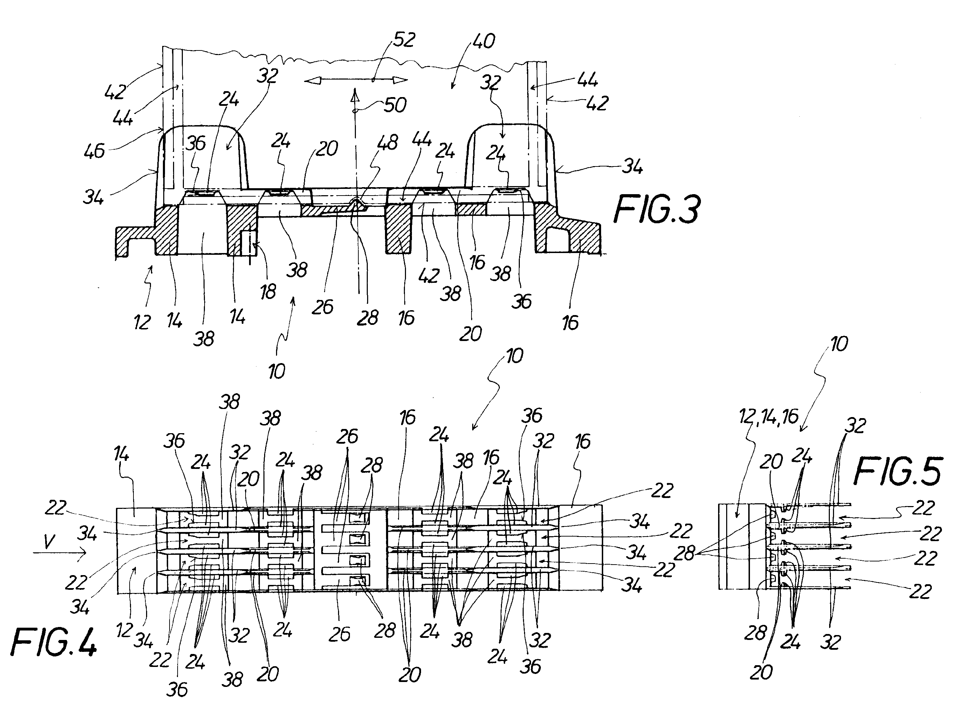

In den Figuren 1 bis 5 sind gleiche Einzelheiten jeweils mit den selben Bezugsziffern bezeichnet, so daß es sich erübrigt, alle diese Einzelheiten in Verbindung mit den einzelnen Figuren jeweils detailliert zu beschreiben. In Figur 3 ist außerdem mit dünnen strichpunktierten Linien abschnittweise ein CS-Diarähmchen 40 verdeutlicht, das mit einer Randkante 42 auf der Basis 12 des Diamagazines 10 aufliegt. Mit der Bezugsziffer 44 ist die umlaufende Rille bezeichnet, die in der Nachbarschaft jeder Randkante 42 um den Umfangsrand 46 des Diarähmchens 40 umläuft. Aus Figur 3 ist auch eine Kerbe 48 ersichtlich, wobei das CS-Diarähmchen 40 in der Mitte jeder Randkante 42 mit einer solchen Kerbe 48 ausgebildet ist. In die Kerbe 48 der an der Basis 12 anliegenden Randkante 42 ist die Rastnase 28 des entsprechenden federnden Fingers 26 eingerastet. Die Ansätze 24 sind in die entsprechenden Rillen 44 eingerastet. Durch die in die entsprechenden Rillen 44 eingerasteten Ansätze 24 ist das entsprechende Diarähmchen 40 an einem Herausfallen aus dem Diamagazin 10 in Richtung des Pfeiles 50 gehindert. Durch die in die Kerbe 48 eingerastete Rastnase 28 des Fingers 26 ist das Diarähmchen 40 an einer ungewollten seitlichen Verschiebung in Richtung des Doppelpfeiles 52 gehindert, so daß sich insgesamt eine unverlierbare bzw. verschüttsichere Halterung der einzelnen CS-Diarähmchen 40 im Diamagazin 10 ergibt, wobei es erfindungsgemäß möglich ist, die Diarähmchen 40 entweder auf der einen oder auf der anderen Seite aus dem Diamagazin 10 zu entnehmen. Das Diamagazin 10 eignet sich folglich - wie bereits erwähnt worden ist - zur Verwendung in einem Diaprojektor mit Überblendtechnik.

## Patentansprüche

1. Diamagazin für Diarähmchen (40) die entlang ihres Umfangsrandes (46) auf ihren beiden Seiten mit einer umlaufenden Rille (44) und die an jeder Randkante (42) des Umfangsrandes (46) mit einer Kerbe (48) ausgebildet sind, wobei das Diamagazin (10) an einer Basis (12) voneinander beabstandete Querrippen (20) aufweist, durch welche Anteile (22) zur Aufnahme je eines Diarähmchens (40) gebildet sind, wobei von jeder Querrippe (20) seitlich mindestens ein in eine Rille (44) des entsprechenden Diarähmchens (40) eingreifender Ansatz (24) wegsteht und die Basis (12) mit voneinander beabstandeten federnden Fingern (26) versehen ist, von welchen jeweils einer einem Abteil (22) zugeordnet ist und von welchen jeder mit einer nach oben stehenden Rastnase (28) zum Einrasten in die Kerbe (48) des entsprechenden Diarähmchens (40) ausgebildet ist, und wobei zur verkippsicheren Halterung der Diarähmchen (40) mit den Querrippen (20) fluchtende Halterippen (32) von der Basis (12) nach oben stehen,
**dadurch gekennzeichnet,**
daß das Diamagazin (10) in seiner Querrichtung mit voneinander getrennten Querrippen (20) ausgebildet ist, zwischen welchen die entsprechenden Rastnasen (28) der Anteile (22) vorgesehen sind, wobei die in Längsrichtung des Diamagazins (10) miteinander fluchtenden Rastnasen (28) eine Symmetrieachse bilden, entlang der die Querrippen (20) angeordnet sind, und jede der sich in Querrichtung gegenüber liegenden Querrippe (20) eine nach oben stehende Halterippe (32) aufweist, wodurch eine beidseitige Bestückung des Diamagazins (10) sowie eine beidseitige Entnahme von Diarähmchen aus dem Diamagazin ermöglicht wird.

2. Diamagazin nach Anspruch 1,
**dadurch gekennzeichnet,**
daß die Halterippe (32) und die zugehörige Querrippe (20) eine gemeinsame Außenkante (34) bilden.

3. Diamagazin nach Anspruch 2,
**dadurch gekennzeichnet,**
daß jede Außenkante (34) schneidenförmig ausgebildet ist.

4. Diamagazin nach einem der vorhergehenden Ansprüche,
**dadurch gekennzeichnet,**
daß jede Halterippe (32) in Querrichtung des Diamagazines (10) eine Breitenabmessung aufweist, die kleiner ist als die Länge der entsprechenden Querrippe (20).

5. Diamagazin nach Anspruch 4,
**dadurch gekennzeichnet,**
daß von jeder Querrippe (20) auf jeder Seite zwei voneinander beabstandete Ansätze (24) wegstehen, von welchen einer im Bereich der zugehörigen Halterippe (32) und der zweite im Bereich des halterippenfreien Abschnittes der entsprechenden Querrippe (20) angeformt ist.

6. Diamagazin nach Anspruch 2 und 5,
**dadurch gekennzeichnet,**
daß jeder im Bereich der zugehörigen Halterippe (32) vorgesehene Ansatz (24) an seinem der Außenkante (34) von Quer - und Halterippe (20, 32) zugewandten Endabschnitt mit einer Anschrägung (36) ausgebildet ist.

7. Diamagazin nach Anspruch 6,
**dadurch gekennzeichnet,**
daß jeder im Bereich der zugehörigen Halterippe (32) vorgesehene, mit einer Abschrägung (36) ausgebildete Ansatz (24) gegen die entsprechende Außenkante (34) von Quer - und Halterippe (20, 32) in das Innere des Diamagazins (10) versetzt ist.

## Claims

1. Slide magazine for slide frames (40) which are designed with a peripheral groove (44) on both sides along their peripheral border (46) and with a notch (48) on each edge (42) of the peripheral border (46), the slide magazine (10) having, on a base (12), spaced-apart transverse ribs (20) by means of which compartments (22) for receiving one slide frame (40) in each case are formed, at least one projection (24) which engages in a groove (44) of the corresponding slide frame (40) protruding laterally from each transverse rib (20), and the base (12) being provided with spaced-apart resilient fingers (26), one of which is assigned to one compartment (22) in each case, and each of which is designed with a catch lug (28) extending upwards for engaging in the notch (48) of the corresponding slide frame (40), and holding ribs (32) which are flush with the transverse ribs (20) extending upwards from the base (12) to hold the slide frames (4) securely against tilting, characterized in that the slide magazine (10) is designed, in its transverse direction, with transverse ribs (20) which are separate from one another and between which the corresponding catch lugs (28) of the compartments (22) are provided, the catch lugs (28) which are flush with one another in the longitudinal direction of the slide magazine (10) forming an axis of symmetry, along which the transverse ribs (20) are arranged, and each of the transverse ribs (20) located opposite one another in the transverse direction having an upwardly extending holding rib (32), as a result of which loading the slide magazine (10) from both sides and removing slide frames from the slide magazine from both sides are made possible.

2. Slide magazine according to Claim 1, characterized in that the holding rib (32) and the associated transverse rib (20) form a common outer edge (34).

3. Slide magazine according to Claim 2, characterized in that each outer edge (34) is designed in the manner of a cutting edge.

4. Slide magazine according to one of the preceding claims, characterized in that each holding rib (32) has, in the transverse direction of the slide magazine (10), a width dimension which is smaller than the length of the corresponding transverse rib (20).

5. Slide magazine according to Claim 4, characterized in that two spaced-apart projections (24) protrude from each transverse rib (20) on each side, one of which projections is moulded on in the region of the associated holding rib (32), and the second is moulded on in the region of the section of the corresponding transverse rib (20) which is free of the holding rib.

6. Slide magazine according to Claims 2 and 5, characterized in that each projection (24) provided in the region of the associated holding rib (32) is designed with a slope (36) at its end section facing the outer edge (34) of the transverse and holding ribs (20, 32).

7. Slide magazine according to Claim 6, characterized in that each projection (24) provided in the region of the associated holding rib (32) and designed with a slope (36) is offset into the interior of the slide magazine (10) relative to the corresponding outer edge (34) of the transverse and holding ribs (20, 32).

## Revendications

1. Chargeur pour cadres de diapositive (40), qui sont réalisés, le long de leur bord périphérique (46), avec une rainure périphérique (44) sur leurs deux faces et qui sont réalisés, sur chaque arête (42) du bord périphérique (46), avec une entaille (48), le chargeur de diapositives (10) présentant à une base (12) des nervures transversales (20) qui sont disposées à distance l'une de l'autre et par lesquelles des compartiments (22) destinés à recevoir chacun un cadre de diapositive (40) sont formés, au moins une saillie (24) pénétrant dans une rainure (44) du cadre de diapositive (40) correspondant partant latéralement à partir de chaque nervure transversale (20), la base (12) étant pourvue de doigts flexibles (26), disposés à distance l'un de l'autre, dont chaque fois un est adjoint à un compartiment (22) et dont chacun est réalisé avec un ergot en saillie vers le haut (28) pour s'encliqueter dans l'entaille (48) du cadre de diapositive (40) correspondant, des nervures de retenue (32) alignées avec les nervures transversales (20) faisant saillie vers le haut à partir de la base (12) pour maintenir les cadres de diapositive (40) d'une manière sûre vis-à-vis d'un basculement,
caractérisé en ce que le chargeur de diapositives (10) est, dans sa direction transversale, réalisé avec des nervures transversales (20) qui sont séparées l'une de l'autre et entre lesquelles les ergots d'encliquetage (28) correspondants des compartiments (22) sont prévus, les ergots d'encliquetage (28) mutuellement alignés dans la direction longitudinale du chargeur de diapositives (10) formant un axe de symétrie le long duquel les nervures transversales (20) sont agencées, et en ce que chacune des nervures transversales (20) qui se font face dans la direction transversale présente une nervure de retenue en saillie vers le haut (32), ce qui permet un chargement des deux côtés du chargeur de diapositives (10) ainsi qu'un prélèvement des deux côtés des cadres de diapositive à partir du chargeur.

2. Chargeur de diapositives suivant la revendication 1, caractérisé en ce que les nervures de retenue (32) et les nervures transversales correspondantes (20) forment un bord extérieur commun (34).

3. Chargeur de diapositives suivant la revendication 2, caractérisé en ce que chaque bord extérieur (34) est réalisé en forme de taillant.

4. Chargeur de diapositives suivant l'une des revendications précédentes, caractérisé en ce que chaque nervure de retenue (32) présente dans la direction transversale du chargeur de diapositives (10) une dimension en largeur qui est plus petite que la longueur de la nervure transversale (20) correspondante.

5. Chargeur de diapositives suivant la revendication 4, caractérisé en ce que, à partir de chaque nervure transversale (20), partent de chaque côté deux saillies (24) qui sont disposées à distance l'une de l'autre et dont l'une est agencée dans la zone de la nervure de retenue correspondante (32) et la deuxième est agencée dans la zone de la section exempte de nervure de retenue de la nervure transversale correspondante (20).

6. Chargeur de diapositives suivant l'une des revendications 2 et 5, caractérisé en ce que chaque saillie (24) prévue dans la zone de la nervure de retenue correspondante (32) est réalisée avec un biseau (36) sur sa section d'extrémité tournée vers le bord extérieur (34) de la nervure transversale et de retenue (20, 32).

7. Chargeur de diapositives suivant la revendication 6, caractérisé en ce que chaque saillie (24) prévue dans la zone de la nervure de retenue correspondante (32) et réalisée avec un biseau (36) est désaxée à l'intérieur du chargeur de diapositives (10) vers le bord extérieur correspondant (34) d'une nervure transversale et de retenue (20, 32).
